# EUROPEAN PATENT APPLICATION

(11) **EP 4 164 281 A1**
(43) Date of publication of application: **12.04.2023**
(21) Application number: 20940090.2
(22) Date of filing: 08.06.2020
(51) Int. Cl.: H04W 24/08

(54) **POSITION DETERMINATION METHOD AND APPARATUS, AND COMMUNICATION DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2020/094976
(87) International publication number: WO 2021/248284

(57) **Abstract**

The present disclosure relates to a position determination method and apparatus, a communication device and a storage medium. A first UE receives a ranging resource configuration from a base station. The ranging resource configuration indicates communication resources for ranging for the first UE. The first UE communicates with a second UE by the ranging signals to perform a ranging measurement between the first UE and the second UE according to the ranging resource configuration.

## Description

### TECHNICAL FIELD

The present disclosure relates to a field of wireless communication technology, but is not limited to the field of wireless communication technology, in particular to a position determination method and apparatus, a communication device and a storage medium.

### BACKGROUND

At present, a plurality of positioning technologies have been standardized in a cellular mobile communication, positioning of a user equipment (UE) may be realized, a network side may request positioning of the UE, and the UE may also request positioning of itself.

The positioning and ranging between long-distance UEs is basically achieved by positioning servers on the network side using interactive geographic coordinates. Related communication protocols of the cellular mobile communication standards may not support the mutual positioning and ranging between UEs.

### SUMMARY

In view of this, the present disclosure provides a position determination method and apparatus, a communication device and a storage medium.

According to a first aspect of embodiments of the present disclosure, a position determination method is provided, which is performed by a first UE. The method includes:
receiving a ranging resource configuration from a base station, in which the ranging resource configuration indicates communication resources for ranging for the first UE; and
communicating with a second UE by a ranging signal to perform a ranging measurement between the first UE and the second UE based on the ranging resource configuration.

In one embodiment, the method further includes:
a distance between the first UE and the second UE is determined based on a total transmission duration of the ranging signals transmitted between the first UE and the second UE, and a response delay to the ranging signal of the first UE and/or a response delay to the ranging signal of the second UE.

In one embodiment, communicating with a second UE by a ranging signal to perform a ranging measurement between the first UE and the second UE based on the ranging resource configuration includes:
sending the first ranging signal on a sending resource configured by the ranging resource configuration; and
receiving, on a receiving resource configured by the ranging resource configuration, a second ranging signal returned by the second UE based on the ranging signal of the first UE.

In one embodiment, the total transmission duration includes: a first round-trip time (RTT), which is a transmission duration between a sending timing when the first UE sends the first ranging signal and a receiving timing when the first UE receives the second ranging signal from the second UE based on the first ranging signal from the first UE.

In one embodiment, communicating with a second UE by a ranging signal to perform a ranging measurement between the first UE and the second UE based on the ranging resource configuration includes:
receiving, on a receiving resource configured by the ranging resource configuration, a second ranging signal sent by the second UE; and
sending, on a sending resource configured by the ranging resource configuration, a third ranging signal returned in response to the second ranging signal sent by the second UE.

In one embodiment, the total transmission duration includes: a second RTT, which is the transmission duration between a sending timing when the second UE sends the ranging signal and a receiving timing when the second UE receives a ranging signal returned by the first UE based on the ranging signal of the second UE.

In one embodiment, the method further includes:
receiving first indication information carrying the second RTT and/or the response delay to the third ranging signal of the second UE sent by the base station.

In one embodiment, the method further includes:
the UE sending the first indication information is determined, according to the UE identifier carried in the first indication information.

In one embodiment, the method further includes:
determining, according to resource information carried in the first indication information, the third ranging signal sent by the first UE corresponding to the first indication information;
in which, the resource information is configured to indicate the communication resources for the third ranging signal from the first UE and received by the second UE.

In one embodiment, the method further includes:
sending second indication information carrying the first RTT determined in the communication with the second UE and/or the response delay to the second ranging signal from the first UE to the base station.

In one embodiment, the second indication information further includes a UE identifier of the first UE.

In one embodiment, the second indication information further includes resource information indicating a communication resource for a ranging signal of the second UE.

In one embodiment, the method further includes at least one of the following:
sending a first measurement result obtained by performing the ranging measurement based on the ranging signal from the first UE to the base station, to determine the relative position between the first UE and the second UE.
receiving a second measurement result obtained by performing the ranging measurement based on the ranging signal provided by the second UE and sent by the base station, to determine the relative position between the first UE and the second UE.

In one embodiment, the communication resources configured by the ranging resource configuration include: a ranging spectrum resource and/or a ranging time domain resource, in which,
the ranging spectrum resource includes one of the following:
an uplink spectrum resource of a Uu interface;
dedicated spectrum resources chosen from the wireless communication spectrum resources;
the ranging time domain resource includes: an uplink time domain resource of the Uu interface.

According to a second aspect of embodiments of the present disclosure, a position determination method is provided, which is performed by a base station. The method includes:
sending a ranging resource configuration, in which the ranging resource configuration indicates communication resources for ranging for at least two UEs.

In one embodiment, the method further includes:
receiving a measurement result obtained by a first UE of the at least two UEs by performing ranging in response to ranging signals and sent by the first UE, in which the ranging signal is transmitted on the communication resources configured by the ranging resource configuration; and
sending the measurement result to a second UE of the at least two of the UEs.

In one embodiment, receiving a measurement result obtained by a first UE of the at least two UEs by performing ranging in response to ranging signals and sent by the first UE includes:
receiving a round-trip duration RTT determined in an interaction with the second UE and sent by the first UE and/or a response delay to the ranging signal of the first UE, in which the RTT includes: a duration between a sending timing when the first UE sends a first ranging signal and a receiving timing when the first UE receives a second ranging signal returned by the second UE based on the first ranging signal from the first UE;
in which, sending the measurement result to a second UE of the at least two of the UEs includes:
   sending the RTT and/or the response delay to the second ranging signal of the first UE to the second UE, to determine a distance between the first UE and the second UE.

In one embodiment, the measurement result further includes at least one of the following:
a UE identifier of the first UE;
resource information indicating the communication resources.

In one embodiment, the communication resources configured by the ranging resource configuration include: a ranging spectrum resource and/or a ranging time domain resource, in which,
the ranging spectrum resource includes one of the following:
an uplink spectrum resource of a Uu interface;
dedicated spectrum resources chosen from the wireless communication spectrum resources;
the ranging time domain resource includes: an uplink time domain resource of the Uu interface.

According to a third aspect of embodiments of the present disclosure, a position determination apparatus is provided, performed by a first user equipment (UE), including a first receiving module and a ranging module, in which,
the first receiving module is configured to receive a ranging resource configuration from a base station, in which the ranging resource configuration indicates communication resources for ranging for the first UE; and
the ranging module is configured to communicate with a second UE by ranging signals to perform a ranging measurement between the first UE and the second UE based on the ranging resource configuration.

In one embodiment, the apparatus further includes:
a first determining module, configured to determine a distance between the first UE and the second UE based on a total transmission duration of the ranging signals transmitted between the first UE and the second UE, and a response delay to the ranging signal of the first UE and/or a response delay to the ranging signal of the second UE.

In one embodiment, the measuring module includes:
a first sending submodule, configured to send the ranging signal on a sending resource configured by the ranging resource configuration; and
a first receiving submodule, configured to receive, on a receiving resource configured by the ranging resource configuration, a second ranging signal returned by the second UE based on the first ranging signal from the first UE.

In one embodiment, the total transmission duration includes: a first round-trip time (RTT), which is the transmission duration between a sending timing when the first UE sends the first ranging signal and a receiving timing when the first UE receives the second ranging signal from the second UE based on the first ranging signal from the first UE.

In one embodiment, the measuring module includes:
a second receiving submodule, configured to receive, on a receiving resource configured by the ranging resource configuration, a second ranging signal sent by the second UE; and
a second sending submodule, configured to send, on a sending resource configured by the ranging resource configuration, a third ranging signal returned in response to the second ranging signal sent by the second UE.

In one embodiment, the total transmission duration includes: a second RTT, which is the transmission duration between a sending timing when the second UE sends the ranging signal and a receiving timing when the second UE receives a ranging signal returned by the first UE based on the ranging signal of the second UE.

In one embodiment, the apparatus further includes:
a second receiving module, configured to receive first indication information carrying the second RTT and/or the response delay to the third ranging signal of the second UE sent by the base station.

In one embodiment, the apparatus further includes:
a second determining module, configured to determine, according to a UE identifier carried in the first indication information, the UE sending the first indication information.

In one embodiment, the apparatus further includes:
a third determining module, configured to determine, according to resource information carried in the first indication information, the third ranging signal sent by the first UE corresponding to the first indication information;
in which, the resource information is configured to indicate the communication resources for the third ranging signal from the first UE and received by the second UE.

In one embodiment, the apparatus further includes:
a first sending module, configured to send second indication information carrying the first RTT determined in the communication with the second UE and/or the response delay to the second ranging signal from the first UE to the base station.

In one embodiment the second indication information further includes a UE identifier of the first UE.

In one embodiment, the second indication information further includes resource information indicating a communication resource for a ranging signal of the second UE.

In one embodiment, the apparatus further includes at least one of the following:
a second sending module, configured to send a first measurement result obtained by performing the ranging measurement based on the ranging signals from the first UE to the base station, to determine a relative position between the first UE and the second UE; and
a third receiving module, configured to receive a second measurement result obtained by performing the ranging measurement based on the ranging signals provided by the second UE and sent by the base station, to determine the relative position between the first UE and the second UE.

In one embodiment, the communication resources configured by the ranging resource configuration include: a ranging spectrum resource and/or a ranging time domain resource, in which,
the ranging spectrum resource includes one of the following:
an uplink spectrum resource of a Uu interface;
dedicated spectrum resources chosen from the wireless communication spectrum resources;
the ranging time domain resource includes: an uplink time domain resource of the Uu interface.

According to a fourth aspect of embodiments of the present disclosure, a position determination apparatus is provided, which is performed by a base station, including a third sending module, in which,
the third sending module, configured to send a ranging resource configuration, in which the ranging resource configuration indicates communication resources for ranging for at least two UEs.

In one embodiment, the apparatus further includes:
a fourth receiving module, configured to receive a measurement result obtained by performing ranging on ranging signals by a first UE sent by the first UE of at least two UEs, in which the ranging signal is transmitted on the communication resources configured by the ranging resource configuration; and
the third sending module, configured to send the measurement result to a second UE of at least two of the UEs.

In one embodiment, the fourth receiving the module includes:
a third receiving submodule, configured to receive a round-trip duration RTT determined in an interaction with the second UE and sent by the first UE and/or a response delay to the ranging signal of the first UE, in which the RTT includes: a duration between a sending timing when the first UE sends a first ranging signal and a receiving timing when the first UE receives a second ranging signal returned by the second UE based on the first ranging signal from the first UE;
and the third sending module includes:
   a third sending submodule, configured to send the RTT and/or the response delay to the second ranging signal of the first UE to the second UE, to determine a distance between the first UE and the second UE.

In one embodiment, the measurement result further includes at least one of the following:
a UE identifier of the first UE;
resource information indicating the communication resources.

In one embodiment, the communication resources configured by the ranging resource configuration include: a ranging spectrum resource and/or a ranging time domain resource, in which,
the ranging spectrum resource includes one of the following:
an uplink spectrum resource of a Uu interface;
dedicated spectrum resources chosen from the wireless communication spectrum resources;
the ranging time domain resource includes: an uplink time domain resource of the Uu interface.

According to a fifth aspect of the present disclosure, a communication device is provided, and includes a processor, a transceiver, a memory and an executable program stored in the memory and capable of running by the processor, when the processor executes the executable program, the steps of a position determination method according to the first aspect and the second aspect are executed.

According to a sixth aspect of the present disclosure, a storage medium with a computer instruction stored thereon is provided, in which the instruction implements the steps according to the first aspect and the second aspect when executed by the processor.

The position determination method and apparatus, the communication device, and the storage medium are provided in the embodiments of the present disclosure. The first UE receives the ranging resource configuration from the base station. The ranging resource configuration indicates communication resources for ranging by the first UE. The first UE communicates with the second UE by the ranging signal to perform the ranging measurement between the first UE and the second UE according to the ranging resource configuration. Therefore, the first UE and the second UE do not need to establish a communication connection, the ranging signal is transmitted on the resources allocated by the base station, the relative position is determined, and different options for the UE to determine the position are provided.

It should be understood that the above general descriptions and following detailed descriptions are only illustrative and descriptive, and may not be a limitation in an embodiment of the disclosure.

### BRIEF DESCRIPTION OF THE DRAWINGS

The drawings herein are incorporated into the specification and constitute a part of the specification, show embodiments in conformity with embodiments of the present disclosure, and explain the principle in embodiments of the present disclosure together with the specification.
FIG. 1 is a structure diagram illustrating a wireless communication system according to an example embodiment;
FIG. 2 is a schematic flowchart illustrating a position determination method according to an example embodiment;
FIG. 3 is a diagram illustrating an information interaction in a position determination process according to an example embodiment;
FIG. 4 is a diagram illustrating an information interaction in a position determination process according to another example embodiment.
FIG. 5 is a diagram illustrating an information interaction in a position determination process according to another example embodiment.
FIG. 6 is a schematic flowchart illustrating a position determination method according to another example embodiment;
FIG. 7 is a schematic flowchart illustrating a position determination method according to another example embodiment;
FIG. 8 is a diagram illustrating an information interaction in a position determination process according to another example embodiment;
FIG. 9 is a block diagram illustrating a position determination apparatus according to an example embodiment;
FIG. 10 is a block diagram illustrating a position determination apparatus according to another example embodiment;
FIG. 11 is a block diagram illustrating a device for position determination according to an example embodiment.

### DETAILED DESCRIPTION

The example embodiments will be described in detail here, and examples thereof are shown in the accompanying drawings. When the following descriptions are referred to the accompanying drawings, unless otherwise indicated, the same numbers in different drawings represent the same or similar elements. The implementations described in the following example embodiments do not represent all the implementations consistent with the present invention. Rather, they are merely examples of the apparatus and method consistent with some aspects of the present invention as detailed in the appended claims.

The terms described in the present disclosure are only for the purpose of describing specific embodiments and are not intended to limit the embodiments of the present disclosure. The singular forms "a", "the" and "said" used in the embodiments of the present disclosure and the attached claim are also intended to include plural forms, unless the context clearly indicates otherwise. It should also be understood that the term "and/or" used in the present disclosure means and includes any or all possible combinations of one or more associated listed items.

It should be understood that, although the terms first, second, third, etc. may be used in the embodiments of the present disclosure to describe various information, such information shall not be limited to these terms. These terms are only used to distinguish the same type of information. For example, subject to the scope of this present disclosure, first information may also be referred to as second information, and similarly, and second information may also be referred to as first information. It depends on the context. For example, the word "if' as used herein may be interpreted as "in a case that" or "when" or "in response to determination".

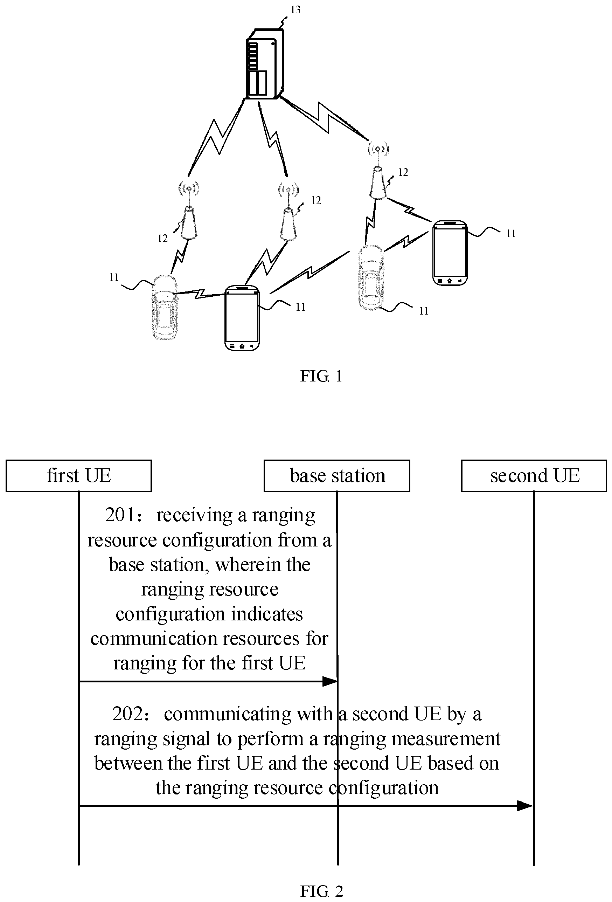

FIG. 1 is a diagram illustrating a wireless communication system in an embodiment of the present disclosure. As illustrated in FIG. 1, the wireless communication system is a communication system based on cellular mobile communication technology. The wireless communication system may include several terminals 11 and several base stations 12.

The terminal 11 may refer to a device that provides voice and/or data connectivity for the user. The terminal 11 may communicate with one or more core networks through a radio access network (RAN). The terminal 11 may be an internet of things terminal, for example, a sensor device, a mobile phone (or referred to as a cellular phone) and a computer including an internet of things terminal, for example, may be a fixed, portable, compact, handheld, computer built-in or vehicle-mounted apparatus. For example, a station (STA), a subscriber unit, a subscriber station, a mobile station, a mobile, a remote station, an access point, a remote terminal, an access terminal, a user terminal, a user agent, a user device or a user equipment (UE). Alternatively, the terminal 11 may be a device of an unmanned vehicle, a vehicle device, or the terminal 11 may be a vehicle-mounted device, for example, may be a driving computer with a wireless communication function, or a wireless communication device externally connected to a driving computer. Alternatively, the terminal 11 may be a roadside device, for example, may be a street lamp with the wireless communication function, a signal light or other roadside devices, etc.

The base station 12 may be a network side device in the wireless communication system. The wireless communication system may be a 4th generation mobile communication (4G) system, also referred to as a long term evolution (LTE) system; or the wireless communication system may be a 5G system, also referred to as a new radio (NR) system or a 5G NR system. Alternatively, the wireless communication system may be a next generation system of the 5G system. An access network in the 5G system may be referred to as a new generation-radio access network (NG-RAN) or a MTC system.

The base station 12 may be an eNB adopted in 4G system. Alternatively, the base station 12 may be a base station with a centralized distributed architecture (gNB) in the 5G system. When the base station 12 adopts the centralized distributed architecture, it generally includes a central unit (CU) and at least two distributed units (DU). Protocol stacks at a Packet Data Convergence Protocol (PDCP) layer, a Radio Link Control (RLC) layer and a Media Access Control (MAC) layer are configured in the CU; a physical (PHY) layer protocol is configured in the DU. The specific implementation of the base station 12 is not limited in the embodiments of the disclosure.

The base station 12 may establish a wireless connection with the terminal 11 via a wireless air interface. In different implementations, the wireless air interface is a wireless air interface based on a 4G standard; or, the wireless air interface is a wireless air interface based on a 5G standard. For example, the wireless air interface is a new air interface; or, the wireless air interface may be a wireless air interface based on a next generation mobile communication network technology standard of a 5G.

In some embodiments, E2E (end to end) connection may also be established between the terminals 11. For example, V2V (vehicle to vehicle) communication, V2I (vehicle to infrastructure roadside equipment) communication, V2P (vehicle to person) communication and the like scenes in V2X (vehicle to everything).

In some embodiment, the wireless communication system may further include a network management device 13.

Several base stations 12 are connected with the network management device 13 respectively. The network management device 13 may be a core network device in the wireless communication system. For example, the network management device 13 may be a mobility management entity (MME) in an evolved packet core (EPC). Alternatively, the network management device may be other core network devices, for example, a Serving GateWay (SGW), a Public Data Network GateWay (PGW), a Policy and Charging Rules Function (PCRF) or a Home Subscriber Server (HSS), etc. The implementation of the network management device 13 is not limited in the embodiments of the disclosure.

The execution subject involved in the embodiments of the present disclosure includes, but not limited to, the UE in a cellular mobile communication system, and the base station in the cellular mobile communication system, etc.

As illustrated in FIG. 2, a position determination method is provided in an embodiment of the present disclosure, which is performed by a first UE of a communication system, and the position determination method may include the following steps.

At step 201, a ranging resource configuration is received from a base station. The ranging resource configuration indicates communication resources for ranging for the first UE.

At step 202, the first UE communicates with a second UE by ranging signals to perform a ranging measurement between the first UE and the second UE based on the ranging resource configuration.

The communication system may be a cellular mobile communication system. The base station may be a base station in the cellular mobile communication system. The UEs may be mobile phone terminals in the cellular mobile communication system, and etc. The UEs may be camped on the same base station.

The communication resources configured by the ranging resource configuration may be used for transmitting ranging signals for ranging measurements between the UEs. A relative position between the two devices may be obtained by the ranging measurement. The relative position may include the distance between the two communication devices, an angle between a straight line connecting the two communication devices relative to a reference line and etc.

The ranging signal may be an information-free signal which does not carry specific information content and is only used for a signal measurement. For example, the ranging signal may be a signal including a predetermined encoding without a particular meaning, and the UE may determine that the received signal is the ranging signal according to the predetermined encoding. The predetermined code has no particular meaning.

The ranging signal may also be a signal carrying specific information content.

The base station may actively configure the communication resources for a resident UE, and send the ranging resource configuration. The base station may also configure the communication resources in response to a ranging request of the UE and transmit the ranging resource configuration. The UE may send the ranging request carrying a UE identifier that needs the ranging measurement to the base station. After receiving the ranging request, the base station configures the communication resources for the UE indicated by the identifier carried in the ranging request, and sends the ranging resource configuration.

Here, the base station may allocate the communication resources to more than two UEs, that is, the first UE may perform ranging signal interactions with a plurality of second UEs at the same time. Therefore, ranging measurements between the first UE and the plurality of second UEs are realized, and then the relative positions between the first UE and the plurality of UEs are determined.

The ranging measurement between the first UE and the second UE may be a process that the relative position of the first UE and the second UE is determined based on the measurement results of the ranging signals transmitted by the first UE and the second UE. The relative position may include: a distance between the first UE and the second UE, and/or an angle between a straight line connecting the first UE and the second UE relative to a predetermined reference line, etc. Here, the measurement result may be reception quality parameters of the ranging signal measured by the UE, a round-trip time of the ranging signals, the response time to the ranging signal of the UE, and etc.

For example, the second UE may send a ranging signal based on a predetermined transmission power (e.g., by broadcasting). The first UE may measure the ranging signal sent by the second UE, determine a fading condition of the signal on the basis of parameters such as the strength of the ranging signal, and then calculate a distance between the first UE and the second UE. The second UE may also calculate the distance between the first UE and the second UE in a similar manner.

Therefore, the first UE and the second UE do not need to establish a communication connection, the ranging signal is transmitted on the resources allocated by the base station, the relative position is determined, and different options for the UE to determine the position are provided.

In one embodiment, the method further includes at least one of the following:
a first measurement result obtained by performing the ranging measurement based on the ranging signal from the first UE is sent to the base station, to determine the relative position between the first UE and the second UE;
receiving a second measurement result obtained by performing the ranging measurement based on the ranging signal provided by the second UE and sent by a base station; and determining the relative position of the first UE and the second UE based on the second measurement result.

The communication resources transmitting the first measurement result and/or the second measurement result may be different from the communication resources configured by the ranging resource configuration.

In a ranging measurement process, the first UE and the second UE usually need to obtain the measurement result of each other, and then the relative position of the first UE and the second UE is determined.

For example, the second UE may send the ranging signal by using a certain transmitting power, the first UE may measure the ranging signal sent by the second UE, a fading of the signal is determined based on the parameters such as the strength of the ranging signal and etc., and the distance between the first UE and the second UE are further determined. The first UE needs to obtain a transmitting power, so that the distance may be determined.

Since the ranging signal may be an information-free signal which does not carry specific information content, it is only used for a signal measurement. Data content such as a measurement result that needs to be interacted in the ranging measurement of the first UE and the second UE may be forwarded by the base station.

The first UE may send the measurement result measured by the first UE to the base station, and the base station sends the measurement result to the second UE. The second UE may send the measurement result measured by the second UE to the base station, and the base station sends the measurement result to the first UE.

For example, the second UE may send the transmitting power of the ranging signal thereof to the base station, and the base station sends the transmitting power to the first UE.

Therefore, for the situation that the first UE and the second UE do not establish a communication connection, exchange of the data of the first UE and the second UE in the ranging measurement is achieved.

In one embodiment, the method further includes:
a distance between the first UE and the second UE is determined based on a total transmission duration of the ranging signals transmitted between the first UE and the second UE, and a response delay to the ranging signal of the first UE and/or a response delay to the ranging signal of the second UE.

Here, during an interaction process of the ranging signals, the ranging signals may be trigger signals. The first UE may send a first ranging signal to the second UE, and the second UE is triggered by the first ranging signal to send a second ranging signal to the first UE. After receiving the second ranging signal, the first UE may also be triggered to return a third ranging signal to the second UE. Times that the first UE and the second UE respond to the ranging signal and trigger return ranging signal may be agreed in advance or specified by a communication protocol. In one ranging process, the ranging signal is sent at least once by the first UE or the second UE. The duration between the moment when the ranging signal is first sent by UE 1 or UE 2, and the moment when the ranging signal is last received by UE 1 or UE 2 may be referred to as the total transmission duration. The total transmission duration may include one or more RTTs.

For example, it may be agreed that the first UE is not triggered by the ranging signal, the second UE may be triggered once. After the first UE sends the first ranging signal, the second UE sends the second ranging signal to the first UE in response to the first ranging signal, and after receiving the second ranging signal sent by the second UE, the first UE no longer returns the ranging signal. In this case, the first UE and the second UE each sends a ranging signal once to complete a single round-trip of the ranging signals.

Similarly, the second UE may first send the ranging signal to complete a single round-trip of the ranging signal.

The RTT may be a duration between the moment when the first UE sends the first ranging signal and the moment when the first UE receives a response from the second UE based on the first ranging signal sent by the first UE. The response sent by the second UE may be the second ranging signal. Alternatively, the RTT may also be a duration between the moment when the second UE sends the second ranging signal and a moment when the second UE receives a response from the first UE based on the ranging signal sent by the second UE. The response sent by the first UE may be the third ranging signal.

The response delay to the second ranging signal of the first UE may be a time required for the first UE to receive the second ranging signal, respond to the second ranging signal, and send the third ranging signal to the second UE.

The response delay to the first ranging signal of the second UE may be a time required for the second UE to receive the first ranging signal, respond to the first ranging signal, and then send the second ranging signal to the first UE.

The duration of the ranging signal being transmitted in space may be obtained by subtracting the response delay to the second ranging signal of the first UE and/or the response delay to the first ranging signal of the second UE actually generated during a round-trip of the ranging signals from the total transmission duration. Finally, according to the times the ranging signals are transmitted between the first UE and the second UE, the duration of one transmission of a ranging signal between the first UE and the second UE is obtained. Then, the distance between the first UE and the second UE is determined according to a propagation speed of the ranging signal in the space.

In this way, the distance between the first UE and the second UE is determined.

In one embodiment, the first UE communicates with the second UE by ranging signals to perform a ranging measurement between the first UE and the second UE based on the ranging resource configuration includes:
the first ranging signal is sent on a sending resource configured by the ranging resource configuration; and
the second ranging signal returned by the second UE based on the ranging signal of the first UE is received on a receiving resource configured by the ranging resource configuration.

A resource pool may be configured by the base station. When the ranging signal is sent, the UE may send the ranging signal on a resource selected in the configured resource pool according to requirements, or the UE may send a ranging signal on a specific resource specified by the base station. When the ranging signal is listened, the UE may listen the ranging signal in the configured resource pool, or the UE may listen the ranging signal on the specific resource specified by the base station. In the case that the first ranging signal is initiated by the first UE, the first UE may send a ranging signal on the sending resource configured by the ranging resource configuration and start a timer for timing.

The second UE may listen on the sending resource. When the second UE listens the first ranging signal, the second ranging signal may be returned. The second UE may record the response delay from the moment when the first ranging signal is received to the moment when the second ranging signal is sent to the first UE by timing, and etc.

The first UE may listen, on the receiving resource configured by the ranging resource configuration, the second ranging signal returned by the second UE in response to the first ranging signal from the first UE. When the second ranging signal is received, the timer is stopped, and the first RTT is determined.

In one embodiment, the total transmission duration includes: the first RTT, which is a transmission duration between a sending timing when the first UE sends the first ranging signal and a receiving timing when the first UE receives the second ranging signal from the second UE based on the first ranging signal from the first UE.

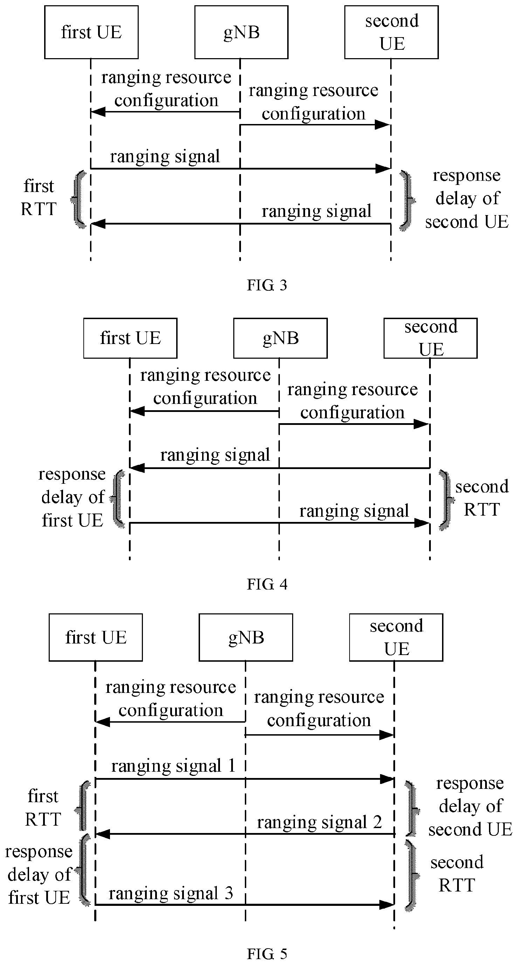

As shown in FIG. 3, for a single round-trip of a first ranging signal initiated by the first UE, the total transmission duration is the first RTT.

In one example, a response delay of the second UE may be subtracted from the first RTT to obtain a time-of-flight of the ranging signal in a single round-trip.

In one embodiment, the first UE communicates with the second UE by ranging signals to perform a ranging measurement between the first UE and the second UE based on the ranging resource configuration includes:
receiving, on a receiving resource configured by the ranging resource configuration, a second ranging signal sent by the second UE; and
sending, on a sending resource configured by the ranging resource configuration, a third ranging signal returned in response to the second ranging signal sent by the second UE.

In one embodiment, the ranging signal is transmitted according to the ranging resource configuration includes:
receiving, on the receiving resource configured by the ranging resource configuration, a second ranging signal sent by the second UE; and
sending, on the sending resource configured by the ranging resource configuration, the third ranging signal returned in response to the second ranging signal sent by the second UE.

For the case of the second ranging signal initiated by the second UE, the first UE may listen the second ranging signal sent by the second UE on the received resource configured by the ranging resource configuration.

After the first UE listens the ranging signal, the third ranging signal may be returned on the transmission resource configured by the second ranging resource configuration. The first UE may record the response delay from the moment when the ranging signal is received by the first UE to the moment when the first UE sends the third ranging signal to the second UE by means of timing, etc.

The second UE may listen the third ranging signal returned by the first UE in response to the second ranging signal of the second UE, and determine a second RTT according to the moment when the second UE sends the second ranging signal and the moment when the second UE receives the returned third ranging signal.

In one embodiment, the total transmission duration includes: the second RTT, which is the transmission duration between a sending timing when the second UE sends the second ranging signal and a receiving timing when the second UE receives the third ranging signal returned by the first UE based on the ranging signal of the second UE.

As shown in FIG. 3, for a single round-trip condition of a ranging signal initiated by the first UE, the total transmission duration is a first RTT.

Similarly, as shown in FIG. 4, for the case of a single round-trip of a ranging signal initiated by a second UE, the total transmission duration is a second RTT.

As shown in FIG. 5, the ranging signal 1 is sent by a first UE and a second UE sends the ranging signal 2 to the first UE after receiving the ranging signal 1, and after receiving the ranging signal 2, the first UE sends the ranging signal 3 to the second UE. The total transmission duration is the sum of the first RTT and the second RTT, in the case of multiple round-trips of the ranging signals.

Similarly, in the case of multiple round-trips of the ranging signals initiated by the second UE, the total transmission duration is the sum of the second RTT and the first RTT.

In the same way, in the case of multiple round-trips of the ranging signals, the total transmission duration includes different numbers of RTTs and a plurality of response delays. A distance between the first UE and the second UE may be determined according to a different number of RTTs and a plurality of response delays.

In one embodiment, the method further includes:
receiving a first indication information carrying the second RTT and/or the response delay to the ranging signal 1 of the second UE sent by the base station.

For a situation as shown in FIG. 4, in which a single round-trip of a ranging signal is initiated by a second UE, the RTT is a second RTT. The second RTT may be determined by the second UE, and the response delay to the ranging signal of the first UE is determined by the first UE. Therefore, the second UE may forward the determined second RTT to the first UE via the base station, and therefore the distance between the first UE and the second UE is determined by the first UE.

For the case of the single round-trip of the ranging signal initiated by the first UE shown in FIG. 3, the RTT is the first RTT. The first RTT may be determined by the first UE, and the response delay to the ranging signal of the second UE is determined by the second UE. Therefore, the second UE may transmit the response delay to the ranging signal of the second UE to the base station, and then the base station may forward the response delay to the first UE, so that the determination of the distance between the first UE and the second UE by the first UE may be realized.

For multiple round-trips of the ranging signals initiated by the second UE shown in FIG. 5, the first UE determines the distance between the first UE and the second UE only after the first RTT, the second RTT, the response delay to the ranging signal of the first UE and the response delay to the ranging signal of the second UE are determined. The second UE may transmit the second RTT determined by the second UE and the response delay to the ranging signal of the second UE to the base station, and then the base station may forward the response delay to the first UE, so that the first UE determines the distance between the first UE and the second UE.

In one embodiment, the method further includes:
the UE sending the first indication information is determined, according to a UE identifier carried in the first indication information.

The UE identifier may be used to determine, by the first UE, a sender of the first indication information.

For example, the first indication information may carry an RTT and/or a response delay, and the UE identifier of the second UE. The first UE may determine, according to the UE identifier, that the first indication information is sent by the second UE, and further determine that the carried RTT and/or response delay is a measurement result of the second UE.

If the first UE performs the ranging measurement with the plurality of UEs at the same time, the first indication information carries the UE identifier, the sender of the indication information may be distinguished. The situation that the distance is determined by adopting the wrong measurement result because of unable to distinguish the indication information sender is reduced. The distance measurement accuracy is improved.

In one embodiment, the method further includes:
determining, according to resource information carried in the first indication information, the ranging signal sent by the first UE corresponding to the first indication information.

The resource information is configured to indicate the communication resources for the ranging signal of the first UE received by the second UE.

The second UE may carry the resource information in the first indication information. The resource information may indicate the communication resources on which the second UE receives the ranging signal from the first UE. The first UE may determine, according to the communication resource of the ranging signal, an RTT in the first indication information and/or a ranging signal corresponding to the response delay. Therefore, the situation that the distance between the first UE and the second UE is wrongly determined due to the fact that the RTT in the first indication information and/or the ranging signal corresponding to the response delay may not be determined may be reduced. The resource information may indicate the time-frequency information of the time-frequency resource on which the second UE receives the ranging signal from the first UE.

In one embodiment, the method further includes: sending a second indication information carrying the first RTT determined in the communication with the second UE and/or the response delay to the ranging signal of the first UE to the base station.

For the case of a single round-trip of the ranging signal initiated by the first UE shown in FIG. 3, the first RTT may be determined by the first UE, and the response delay to the ranging signal of the second UE is determined by the second UE. The first UE may forward the first RTT to the second UE via the base station, and then the distance between the first UE and the second UE may be determined by the second UE.

For the case of the single round-trip of the ranging signal initiated by the second UE shown in FIG. 4, the second RTT may be determined by the second UE, and the response delay to the ranging signal of the first UE is determined by the first UE. Therefore, the first UE may transmit the determined response delay to the ranging signal of the first UE to the base station, and then the base station may forward it to the second UE. Therefore the distance between the first UE and the second UE determined by the second UE may be realized.

For the case of multiple round-trips of the ranging signals initiated by the first UE as shown in FIG. 5, the second UE needs to determine the first RTT, the second RTT, the response delay to the ranging signal of the first UE and the response delay to the ranging signal of the second UE first, and then the second UE may determine the distance between the first UE and the second UE. The first UE may forward the first RTT and the response delay to the ranging signal of the first UE determined by itself to the second UE via the base station, to make the second UE determine the distance between the second UE and the first UE.

In one embodiment, the second indication information further includes the UE identifier of the first UE.

The UE identifier in the second indication information may be configured to determine a sender of the first indication information by the second UE.

For example, the second indication information may carry an RTT and/or a response delay, and the UE identifier of the first UE. The second UE may determine, according to the UE identifier, that the second indication information is sent by the first UE, and further determine that the carried RTT and/or the response delay is the measurement result of the first UE.

If the second UE performs ranging measurements with a plurality of UEs at the same time, the UE identifier is carried in the second indication information. The situation that the distance is determined by adopting the wrong measurement result because of unable to distinguish the indication information sender is reduced. The distance measurement accuracy is improved.

In one embodiment, the second indication information further includes resource information indicating the communication resource for the ranging signal of the second UE.

The first UE may carry resource information in the second indication information, and the resource information may indicate communication resources on which the first UE receives the ranging signal from the second UE. The second UE may determine the RTT and/or the ranging signal corresponding to the response delay in the second indication information based on the communication resource of the ranging signal. Therefore, the situation that the distance between the first UE and the second UE is wrongly determined due to the fact that the RTT and/or the ranging measurement signal corresponding to the response delay in the second indication information may not be determined may be reduced. The resource information may indicate the time-frequency information of the time-frequency resource on which the first UE receives the ranging signal of the second UE. In one embodiment, the communication resources configured by the ranging resource configuration include: a ranging spectrum resource and/or a ranging time domain resource.

In one embodiment, the communication resources configured by the ranging resource configuration include: a ranging spectrum resource and/or a ranging time domain resource.

The ranging spectrum resource includes one of the following:
an uplink spectrum resource of a Uu interface;
dedicated spectrum resource chosen from the wireless communication spectrum resources;
the ranging time domain resource includes: an uplink time domain resource of the Uu interface.

The ranging spectrum resources and/or ranging time domain resources for transmitting the ranging signals may be configured at a network side, and the ranging resource configuration is sent by the base station to the UE.

Here, the ranging spectrum resource may be all or a part of the uplink spectrum resources being used by the Uu port, or the ranging spectrum resource may also be another spectrum resource that may be used for NR Uu port uplink.

Dedicated spectrum resources specially used for transmitting the ranging signals may be chosen from spectrum resources of the wireless communication. The dedicated spectrum resources may not be used for the data transmission on the Uu port. Here, the spectrum resources of the wireless communication may include: NR spectrum resources, and sidelink spectrum resources.

The ranging spectrum resources may include licensed spectrums or unlicensed spectrums.

The ranging time domain resource may be an uplink time domain resource of the Uu port, that is, the ranging signal may only be transmitted by the UE in an air interface uplink sending time slot. In this way, the interference to other signals caused by transmitting ranging signals on other uplink time domain resources may be reduced.

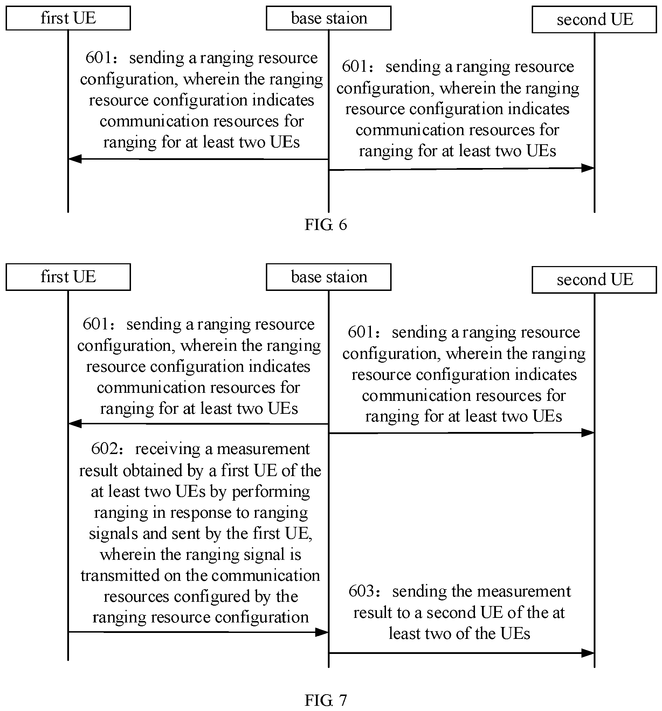

As illustrated in FIG. 6, a position determination method is provided in an embodiment of the present disclosure, which is performed by a base station of a communication system, and the position determination method may include the following steps.

At step 601, a ranging resource configuration is sent. The ranging resource configuration indicates communication resources for ranging for at least two UEs.

The communication system may be a cellular mobile communication system. The base station may be a base station in a cellular mobile communication system. The UEs may be mobile phone terminals in the cellular mobile communication system, and etc. The UEs may be camped on the same base station.

The communication resources configured by the ranging resource configuration may be used for transmitting ranging signals for ranging measurements between UEs. The relative position between the two devices may be obtained by a ranging measurement. The relative position may include the distance between the two communication devices, an angle between a straight line connecting the two communication devices relative to a reference line and etc.

The ranging signal may be an information-free signal which does not carry specific information content and is only used for a signal measurement. For example, the ranging signal may be a signal having a predetermined encoding without a particular meaning, and the UE may determine that the received signal is a ranging signal according to the predetermined encoding.

The ranging signal further may be information carry specific information content.

The base station may actively configure communication resources for a resident UE, and send the ranging resource configuration. The base station may also configure the communication resources in response to a ranging request of the UE and transmit the ranging resource configuration. The UE may send the ranging request carrying an identifier of the UE that needs the ranging measurement to the base station. After receiving the ranging request, the base station configures the communication resources for the UE indicated by the identifier carried in the ranging request, and sends the ranging resource configuration.

Here, the base station may allocate communication resources to more than two UEs, that is, the first UE may perform ranging signal interactions with a plurality of second UEs at the same time. Therefore, distance measurements between the first UE and the plurality of UEs are realized, and then the relative positions between the first UE and the plurality of UEs are determined.

The ranging measurement between the first UE and the second UE may a process that the relative position of the first UE and the second UE is determined based on the measurement results of the ranging signals transmitted by the first UE and the second UE. The relative position may include: a distance between the first UE and the second UE, and/or an angle between a straight line connecting the first UE and the second UE relative to a predetermined reference line, etc. Here, the measurement result may be quality parameters of the ranging signal measured by the UE, a round-trip time of the ranging signals, the response delay to the ranging signal of the UE, and etc.

For example, the second UE may send a ranging signal based on a predetermined transmission power (e.g., by broadcasting), the first UE may measure a ranging signal sent by the second UE, determine a fading condition of the signal on the basis of parameters such as the strength of the ranging signal, and then calculate a distance between the first UE and the second UE. The second UE may also calculate the distance between the first UE and the second UE in a similar manner.

Therefore, the first UE and the second UE do not need to establish a communication connection, the ranging signal is transmitted on the resources allocated by the base station, the relative position is determined, and different options for the UE to determine the position are provided.

In one embodiment, as illustrated in FIG. 7, a position determination method may include the following steps.

At step 602, a measurement result obtained by a first UE of the at least two UEs by performing ranging in response to ranging signals and sent by the first UE is received. The ranging signal is transmitted on the communication resources configured by the ranging resource configuration.

At step 603, the measurement result is sent to a second UE of the at least two of the UEs.

The communication resources for transmitting measurement result may be different from the communication resources configured by the ranging resource configuration.

In the ranging measurement process, the first UE and the second UE usually need to obtain the measurement result of each other, and then the relative position of the first UE and the second UE is determined.

For example, the second UE may send the ranging signal by using a certain transmitting power, the first UE may measure the ranging signal sent by the second UE, a fading of the signal is determined based on the parameters such as the strength of the ranging signal and etc., and the distance between the first UE and the second UE are further determined. The first UE needs to obtain a transmitting power, so that the distance may be determined.

Since the ranging signal may be an information-free signal which does not carry specific information content, it is only used for a signal measurement. Data content such as a measurement result that needs to be interacted in the ranging measurement of the first UE and the second UE may be forwarded by the base station.

The first UE may send the measurement result measured by the first UE to the base station, and the base station sends the measurement result to the second UE. The second UE may send the measurement result measured by the second UE to the base station, and the base station sends the measurement result to the first UE.

For example, the second UE may send the transmitting power of the ranging signal thereof to the base station, and the base station sends the transmitting power to the first UE.

Therefore, for the situation that the first UE and the second UE do not establish a communication connection, exchange of the data of the first UE and the second UE in the ranging measurement is achieved.

In one embodiment, receiving a measurement result obtained by a first UE of the at least two UEs by performing ranging in response to ranging signals and sent by the first UE includes:
receiving a round-trip duration RTT determined in an interaction with the second UE and sent by the first UE and/or a response delay to the ranging signal of the first UE, in which the RTT includes: a duration between a sending timing when the first UE sends a first ranging signal and a receiving timing when the first UE receives a second ranging signal returned by the second UE based on the first ranging signal from the first UE;
sending the measurement result to a second UE of the at least two of the UEs includes:
sending the RTT and/or the response delay to the second ranging signal of the first UE to the second UE, to determine a distance between the first UE and the second UE.

Here, during an interaction process of ranging signals, the ranging signal may be a trigger signal. The first UE may send the ranging signal to the second UE, and the second UE is triggered by the ranging signal to send the ranging signal to the first UE. After receiving the ranging signal, the first UE may also be triggered to return the ranging signal to the second UE. The times that the first UE and the second UE respond to the ranging signal and trigger the return ranging signal may be agreed in advance or specified by a communication protocol. In one ranging process, the ranging signal is sent at least once by the first UE or the second UE. The duration between the moment when the ranging signal is first sent by UE 1 or UE 2, and the moment when the ranging signal is last received by UE 1 or UE 2 may be referred to as the total transmission duration. The total transmission duration may include one or more RTTs.

For example, it may be agreed that the first UE is not triggered by the ranging signal, and the second UE may be triggered once. After the first UE sends the ranging signal, the second UE sends the ranging signal to the first UE in response to the ranging signal, and after receiving the ranging signal sent by the second UE, the first UE no longer returns the ranging signal. In this case, the first UE and the second UE each send the ranging signal once to complete a single round-trip of the ranging signal.

Similarly, the second UE may first send the ranging signal to complete a single round trip of the ranging signal.

The RTT may be a duration between the moment when the first UE sends a ranging signal and the moment when the first UE receives a response from the second UE based on the ranging signal sent by the first UE. The response sent by the second UE may be a ranging signal. Alternatively, the RTT may also be a duration between the moment when the second UE sends the ranging signal and a moment when the second UE receives a response from the first UE based on the ranging signal sent by the second UE. The response sent by the first UE may be a ranging signal.

The response delay to the ranging signal of the first UE may be a time required for the first UE to receive the ranging signal, respond to the ranging signal, and send the ranging signal to the second UE.

The response delay to the ranging signal of the second UE may be a time required for the second UE to receive the ranging signal, respond to the ranging signal, and then send the time required for the ranging signal to the first UE.

The duration of the ranging signal being transmitted in the space may be obtained by subtracting the response delay to the ranging signal of the first UE and/or the response delay to the ranging signal of the second UE actually generated during a round trip of the ranging signals. Finally, according to the times the ranging signals are transmitted between the first UE and the second UE, the duration of one transmission of a ranging signal between the first UE and the second UE is obtained. Then, the distance between the first UE and the second UE is determined according to a propagation speed of the ranging signal in the space.

In this way, the distance between the first UE and the second UE is determined.

As shown in FIG. 3, for the single round-trip of the ranging signal initiated by the first UE, the total transmission duration is the first RTT. Similarly, as shown in FIG. 4, for the single round-trip of the ranging signal initiated by the second UE, the total transmission duration is the second RTT.

As shown in FIG. 5, a ranging signal 1 is sent by a first UE, a second UE sends a ranging signal 2 to the first UE after receiving the ranging signal 1, and the first UE sends ranging signal 3 to the second UE after receiving the ranging signal 2. In the case of a plurality of round-trips of the ranging signals, the total transmission time is the sum of the first RTT and the second RTT. Similarly, for the single round-trip of the ranging signal initiated by the second UE, the total transmission duration is the sum of the first RTT and the second RTT.

By analogy, in the case of multiple round trips of ranging signals, the total transmission duration includes different numbers of RTTs and multiple response delays. The distance between the first UE and the second UE may be determined based on the multiple RTTs and the multiple response delays.

In one embodiment, the measurement result further includes at least one of the following:
a UE identifier of the first UE;
resource information indicating the communication resources.

The UE identification in the measurement result may be configured to determine a sender of the measurement result by the second UE.

For example, the measurement result may carry an RTT and/or a response delay, and the UE identifier of the first UE. The second UE may determine, according to the UE identifier, that the measurement result is sent by the first UE, and further determine that the carried RTT and/or the response delay is the measurement result of the first UE.

The first UE may indicate resource information carried in the measurement result, and the resource information may indicate communication resources on which the first UE receives the ranging signal from the second UE. The second UE may determine the RTT and/or the ranging signal corresponding to the response delay in the measurement result based on the communication resource of the ranging signal. Therefore, the situation that the distance between the first UE and the second UE is wrongly determined due to the fact that the RTT and/or the ranging measurement signal corresponding to the response delay in the measurement result may not be determined may be reduced. The resource information may indicate the time-frequency information of the time-frequency resource on which the first UE receives the ranging signal of the second UE.

In one embodiment, the communication resources configured by the ranging resource configuration include: a ranging spectrum resource and/or a ranging time domain resource, in which,
the ranging spectrum resource comprises one of the following:
an uplink spectrum resource of a Uu interface;
dedicated spectrum resources chosen from the wireless communication spectrum resources;
the ranging time domain resource includes: an uplink time domain resource of the Uu interface.

The ranging spectrum resources and/or ranging time domain resources for transmitting the ranging signals may be configured at a network side, and the ranging resource configuration is sent by the base station to the UE.

Here, the ranging spectrum resource may be all or a part of the uplink spectrum resources being used by the Uu port, or the ranging spectrum resource may also be another spectrum resource that may be used for NR Uu port uplink.

Dedicated spectrum resources specially used for transmitting the ranging signals may be chosen from spectrum resources of the wireless communication. The dedicated spectrum resources may not be used for the data transmission on the Uu port. Here, the spectrum resources of the wireless communication may include: NR spectrum resources, and sidelink spectrum resources.

The ranging spectrum resources may include licensed spectrums or unlicensed spectrums.

The ranging time domain resource may be an uplink time domain resource of the Uu port, that is, the ranging signal may only be transmitted by the UE in an air interface uplink sending time slot. In this way, the interference to other signals caused by transmitting ranging signals on other uplink time domain resources may be reduced.

A specific example is provided below in conjunction with any of the above embodiments.
1. The network configures time-frequency resources and frequency-domain resources for ranging for NR UEs. The frequency domain resources may be all or a part of an uplink spectrum resources that are being used by the Uu interface, or may be other uplink spectrum resource that may be used for a NR Uu port, or the dedicated frequency domain resource for ranging for NR UE. The dedicated spectrum resources indicate that the spectrum resources may not be used in an air interface of the NR. All spectrum resources may be the licensed spectrums or the unlicensed spectrums. The time domain resource may be the uplink time domain resource of the Uu port, that is, the UE may perform ranging only in an uplink time slot of the air interface.
2. The UE ranging process includes two main processes, namely a direct ranging information interaction between the UEs on ranging time-frequency resources configured by a network, and a network-assisted information interaction between the UEs.
3. The UEs directly perform ranging measurement on the time-frequency resources configured by the network, which includes: the UE sends ranging information to other UEs and receives ranging information sent by other UEs in the ranging measurement process.
4. In the process of the direct ranging information interaction of the UE mentioned above, the round-trip time of the ranging information and a reply time of the UE may be determined. The reply time is the response delay between the UE receiving the ranging request and sending the ranging response message.
5. For 3 and 4, the specific process is:
   5.1 the UE sends the ranging request to a peer UE on the time-frequency resource configured by the network, the ranging request is implemented by sending a ranging reference signal (RRS), and the RRS may be configured by the network side;
   5.2 the UE starts a timer when sending the ranging request;
   5.3 after the peer UE receives the ranging request, that is, after the peer UE receives the RRS, the peer UE sends a ranging response message; the message may also be realized by sending the RRS; at the same time, UE1 records the time from receiving the ranging request to sending ranging response message, and the time is the response delay;
   5.4 after the UE receives the ranging response message, the UE stops the timer to calculate the RTT.
6. The network side may assist the UEs to perform information interactions, which includes: the network assists the UEs in performing interactions of the RTTs, the response delays, the UE identifiers and the received RRS time-frequency information. That is, the UEs may send the RTTs, the response delays, the UE identifiers and the received RRS time-frequency information to the network via the Uu port, and the network sends the information to the target UE via the Uu port.

The UE completes the ranging process by the direct ranging information interaction between the UEs and network-assisted UE information interaction.

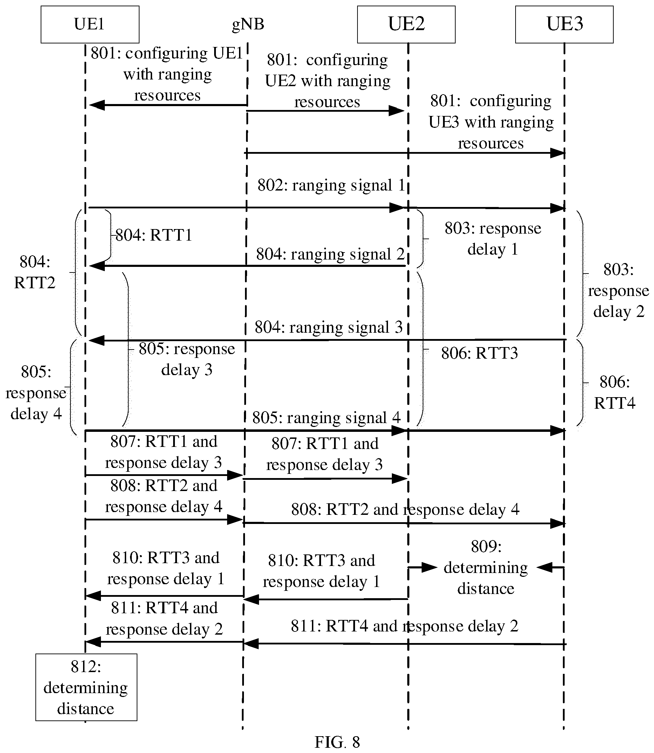

According to the embodiment, the specific method of the embodiment is explained by the ranging process between UE1, UE2 and UE3. As shown in FIG. 8, the specific method specifically includes the following steps.

At step 801, gNB configures the UE 1, UE2 and UE 3 with ranging resources.

At step 802, the UE1 initiates a ranging request, that is, sends a ranging signal 1, and one or more UEs may receive the ranging request. For example, the UE2 and the UE3 receive the ranging request sent by the UE1. Specifically, the UE1 sends an RRS, and the UE2 and the UE3 receive the RRS.

At step 803, the UE 2 and the UE 3 send ranging response messages to the UE1, and the response delay 1 and the response delay 2 are determined.

At step 804, the UE1 receives ranging response messages sent by the UE2 and the UE 3, that is, a ranging signal 2 and a ranging signal 3, and RTT 1 and RTT 2 are determined.

At step 805, the UE 1 may continue to send the ranging message, i.e., a ranging signal 4, and a response delay 3 and a response delay 4 are determined, according to different ranging methods.

At step 806, after the UE2 and the UE1 receive the ranging message sent by the UE1, RTT 3 and RTT 4 are determined respectively.

At step 807, the UE 1 sends the RTT 1 and the response delay 3, the identifier of the UE 1 and the time-frequency information for the ranging signal 2 to the base station via the air interface, and the base station forwards them to the UE 2 via the air interface.

At step 808, the UE 1 sends the RTT 2, the response delay 4, the identifier of the UE 1 and the time-frequency information for the ranging signal 3 to the base station via the air interface, and the base station forwards them to the UE 3 via the air interface

At step 809, the UE2 and the UE 3 respectively determine the distance between themselves and the UE1 according to information forwarded from the air interface of the base station.

At step 810, the UE 2 sends the RTT 3, the response delay 1, the time-frequency information for the ranging signal 1 and the time-frequency information for the ranging signal 4 to the base station via the air interface. The base station forwards them to the UE 1 via the air interface

At step 811, the UE 3 sends the RTT 4, the response delay 2, the time-frequency information for the ranging signal 1 and the time-frequency information for the ranging signal 4 to the base station via the air interface. The base station forwards them to the UE 1 via the air interface

At step 812, the UE1 determines the distances between itself and the UE2 and the UE3 respectively, according to the information forwarded from the air interface of the base station.

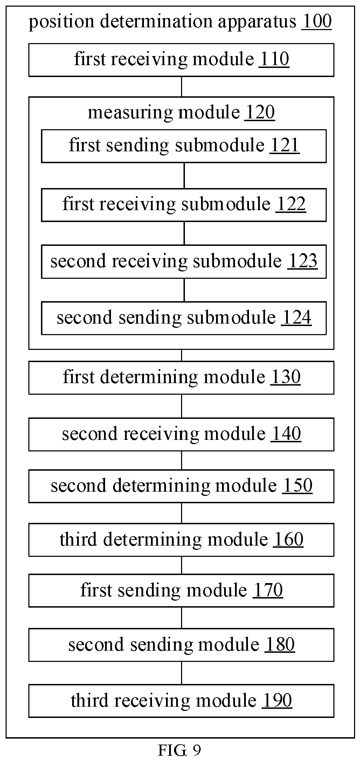

A position determination apparatus is further provided in an embodiment of the present disclosure, which is performed by a UE such as a communication system terminal. FIG. 9 is a schematic diagram of composition structures of the position determination apparatus 100 provided by the embodiment of the present disclosure. As shown in FIG. 9, the apparatus 100 includes a first receiving module 110 and a measuring module 120.

The first receiving module 110 is configured to receive a ranging resource configuration from a base station. The ranging resource configuration indicates communication resources for ranging for the first UE.

The ranging module 120 is configured to communicate with a second UE by ranging signals to perform a ranging measurement between the first UE and the second UE based on the ranging resource configuration.

In one embodiment, the apparatus further 100 includes a first determining module 130.

The first determining module 130 is configured to determine a distance between the first UE and the second UE based on a total transmission duration of the ranging signals transmitted between the first UE and the second UE, and a response delay to the ranging signal of the first UE and/or a response delay to the ranging signal of the second UE.

In one embodiment, the measuring module 120 includes a first sending submodule 121 and a first receiving submodule 122.

The first sending submodule 121 is configured to send a first ranging signal on a sending resource configured by the ranging resource configuration.

The first receiving submodule 122 is configured to receive, on a receiving resource configured by the ranging resource configuration, a second ranging signal returned by the second UE based on the first ranging signal from the first UE.

In one embodiment, the total transmission duration includes: a first RTT, which is the transmission duration between a sending timing when the first UE sends the first ranging signal and a receiving timing when the first UE receives the second ranging signal from the second UE based on the ranging signal from the first UE.

In one embodiment, the measuring module 120 includes a second receiving submodule 123 and a second sending submodule 124.

The second receiving submodule 123 is configured to receive, on a receiving resource configured by the ranging resource configuration, a second ranging signal sent by the second UE.

The second sending submodule 124 is configured to send, on a sending resource configured by the ranging resource configuration, a third ranging signal returned in response to the second ranging signal sent by the second UE.

In one embodiment, the total transmission duration includes: a second RTT, which is the transmission duration between a sending timing when the second UE sends the second ranging signal and a receiving timing when the second UE receives the third ranging signal returned by the first UE based on the ranging signal of the second UE.

In one embodiment, the apparatus 100 further includes a second receiving module 140.

The second receiving module 140 is configured to receive first indication information carrying the second RTT and/or the response delay to the ranging signal of the second UE sent by the base station.

In one embodiment, the apparatus 100 further includes a second determining module 150.

The second determining module 150 is configured to determine, according to the identifier of the UE carried in the first indication information, the UE sending the first indication information.

In one embodiment, the apparatus 100 further includes a third determining module 160.

The third determining module 160 is configured to determine, according to resource information carried in the first indication information, the third ranging signal sent by the first UE corresponding to the first indication information.

The resource information is configured to indicate the communication resources for the third ranging signal from the first UE and received by the second UE.

In one embodiment, the apparatus 100 further includes a first sending module 170.

The first sending module 170 is configured to send second indication information carrying the first RTT determined in the communication with the second UE and/or the response delay to the second ranging signal from the first UE to the base station.

In one embodiment, the second indication information further includes the UE identifier of the first UE.

In one embodiment, the second indication information further includes resource information indicating a communication resource for a ranging signal of the second UE.

In one embodiment, the apparatus further includes at least one of a second sending module 180 and the third receiving module 190.

The second sending module 180 is configured to send a first measurement result obtained by performing the ranging measurement based on the ranging signals from the first UE to the base station, to determine a relative position between the first UE and the second UE.

The third receiving module 190 is configured to receive a second measurement result obtained by performing the ranging measurement based on the ranging signals provided by the second UE and sent by the base station, to determine the relative position between the first UE and the second UE.

In one embodiment, the communication resources configured by the ranging resource configuration include: a ranging spectrum resource and/or a ranging time domain resource.

The ranging spectrum resource includes one of the following:
an uplink spectrum resource of a Uu interface;
dedicated spectrum resources chosen from the wireless communication spectrum resources;
the ranging time domain resource includes: an uplink time domain resource of the Uu interface.

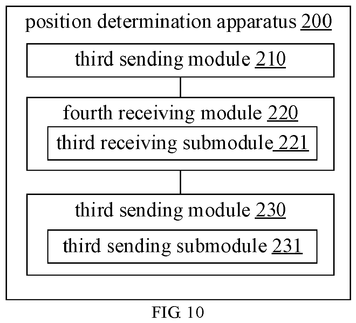

A position determination apparatus is further provided in an embodiment of the present disclosure, which is performed by a base station. FIG. 10 is a schematic diagram of composition structures of the position determination apparatus 200 provided in the embodiment of the present disclosure. As shown in FIG. 10, the apparatus 200 includes a third sending module 210.

The third sending module 210 is configured to send a ranging resource configuration. The ranging resource configuration indicates communication resources for ranging for at least two UEs.

In one embodiment, the apparatus 200 further includes a fourth receiving module 220.

The fourth receiving module 220 is configured to receive a measurement result obtained by a first UE of the at least two UEs by performing ranging in response to ranging signals and sent by the first UE. The ranging signal is transmitted on the communication resources configured by the ranging resource configuration.

The third sending module 230 is configured to send the measurement result to a second UE of the at least two of the UEs.

In one embodiment, the fourth receiving module 220 includes a third receiving submodule 221.

The third receiving submodule 221 is configured to receive a round-trip duration RTT determined in an interaction with the second UE and sent by the first UE and/or a response delay to the ranging signal of the first UE. The RTT includes: a duration between a sending timing when the first UE sends a first ranging signal and a receiving timing when the first UE receives a second ranging signal returned by the second UE based on the first ranging signal from the first UE.

The third sending module 230 includes a third sending submodule 231.

The third sending submodule 231 is configured to send the RTT and/or the response delay to the second ranging signal of the first UE to the second UE, to determine a distance between the first UE and the second UE.

In one embodiment, the measurement result further includes at least one of the following:
a UE identifier of the first UE;
resource information indicating the communication resources.

In one embodiment, the communication resources configured by the ranging resource configuration include: a ranging spectrum resource and/or a ranging time domain resource.
the ranging spectrum resource includes one of the following:
an uplink spectrum resource of a Uu interface;
dedicated spectrum resources chosen from the wireless communication spectrum resources;
the ranging time domain resource includes: an uplink time domain resource of the Uu interface.

In example embodiments, the apparatus 200 may be implemented by one or more CPU (central processing unit), GPU (graphics processing unit), BP (baseband processor), ASIC (application specific integrated circuit), DSP, PLD (programmable logic device), CPLD (complex programmable logic device), FPGA (field-programmable gate array), general-purpose processor, controller, MCU (micro controller unit), microprocessor, or other electronic components. It can also be implemented in combination with one or more radio frequency (RF) antennas to perform the aforementioned method.

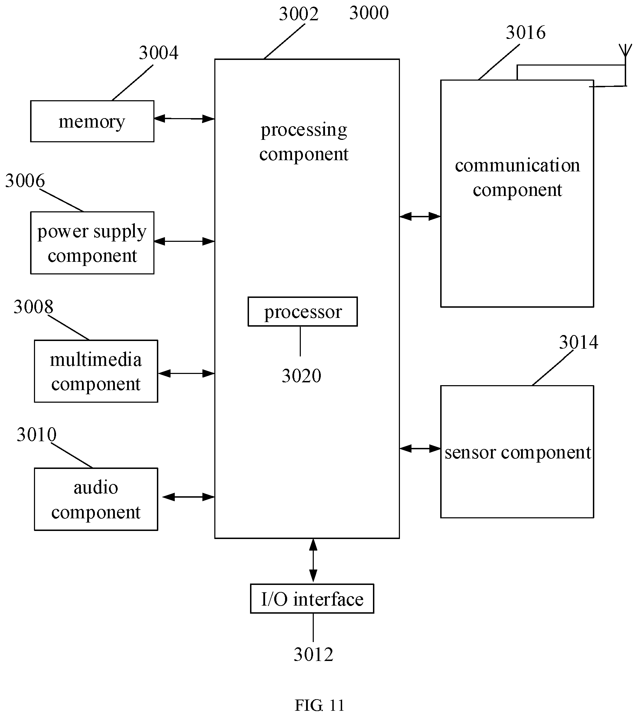

FIG. 11 is a block diagram illustrating a device 3000 for position determination according to an example embodiment. For example, a device 3000 may be a mobile phone, a computer, a digital broadcasting terminal, a messaging device, a game console, a tablet device, a medical equipment, a fitness equipment, a personal digital assistant, etc.

Referring to Fig. 11, the device 3000 may include one or more components: a processing component 3002, a memory 3004, a power supply component 3006, a multimedia component 3008, an audio component 3010, an input/output (I/O) interface 3012, a sensor component 3014, and a communication component 3016.

The processing component 3002 generally controls the whole operation of the device 3000, such as the operations related to display, phone call, data communication, camera operation and recording operation. The processing component 3002 may include one or more processors 3020 to perform instructions, to complete all or part of steps of the above method. In addition, the processing component 3002 may include one or more modules for the convenience of interaction between the processing component 3002 and other components. For example, the processing component 3002 may include a multimedia module for the convenience of interaction between the multimedia component 3008 and the processing component 3002.

The memory 3004 is configured to store all types of data to support the operation of the device 3000. Examples of the data include the instructions of any applications or methods operated on the device 3000, contact data, phone book data, messages, pictures, videos, etc. The memory 3004 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory(ROM), a magnetic memory, a flash memory, a magnetic disk or an optical disk.

The power supply component 3006 may provide power supply for all components of the device 3000. The power supply component 3006 may include power supply management system, one or more power supplies, and other units related to generating, managing and distributing power for the device 3000.

The multimedia component 3008 includes an output interface screen provided between the device 3000 and the user. In some embodiments, a screen may include a liquid crystal display (LCD) and a touch panel (TP). When the screen includes a touch panel, the screen may be implemented as a touch screen to receive input signals from the user. The touch panel includes one or more touch sensors to sense touching, sliding and gestures on the touch panel. The touch sensor may not only sense the boundary of touch or slide action, but also detect the duration and pressure related to the touching or sliding operation. In some embodiments, the multimedia component 3008 includes a front camera and/or a rear camera. When the device 3000 is in operation mode, such as shooting mode or video mode, the front camera or the rear camera may receive the external multimedia data. Each front camera and rear camera may be a fixed optical lens system or an optical lens system with focal length and optical zoom capacity.

The audio component 3010 is configured as an output and/or input signal. For example, the audio component 3010 includes a microphone (MIC). When the device 3000 is in operation mode, such as call mode, record mode, and speech recognition mode, the microphone is configured to receive the external audio signals. The audio signals received may be further stored in the memory 3004 or sent via the communication component 3016. In some embodiments, the audio component 3010 further includes a speaker configured to output an audio signal.

The I/O interface 3012 provides an interface for the processing component 3002 and the peripheral interface module, and the peripheral interface module may be a keyboard, a click wheel, a button, etc. The buttons may include but not limited to a home button, a volume button, a start button and a lock button.

The sensor component 3014 includes one or more sensors, configured to provide various aspects of status assessment for the device 3000. For example, the sensor component 3014 may detect the on/off state of the device 3000 and the relative positioning of the component. For example, the component is a display and a keypad of the device 3000. The sensor component 3014 may further detect the location change of the device 3000 or one component of the device 3000, the presence or absence of contact between the user and the device 3000, the orientation or acceleration/deceleration of the device 3000, and the temperature change of the device 3000. The sensor component 3014 may include a proximity sensor, which is configured to detect the existence of the objects nearby without any physical contact. The sensor component 3014 may further include a light sensor such as CMOS or CCD image sensor, which is configured to use in imaging applications. In some embodiments, the sensor component 3014 may further include an acceleration transducer, a gyroscope sensor, a magnetic sensor, a pressure sensor or a temperature sensor.

The communication component 3016 is configured for the convenience of wire or wireless communication between the device 3000 and other devices. The device 3000 may access wireless networks based on communication standard, such as WiFi, 2G or 3G, or their combination. In an exemplary embodiment, the communication component 3016 receives broadcast signals or broadcast-related information from an external broadcast management system via a broadcast channel. In an exemplary embodiment, the communication component 3016 further includes a near field communication (NFC) module to facilitate short-range communication. For example, an NFC module may be implemented based on radio frequency identification (RFID) technology, infrared data association (IRDA) technology, ultra-wideband (UWB) technology, bluetooth (BT) technology and other technologies.

In an exemplary embodiment, the device 3000 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an example embodiment, a non-temporary computer readable storage medium is further provided which includes instructions, such as the memory 3004 including instructions. The instructions may be executed by the processor 3020 of the device 3000 to complete the above methods. For example, the non-transitory computer readable storage medium may be a ROM, a random access memory (RAM), a CD-ROM, a magnetic tape, a floppy disk, an optical data storage device, etc.

After considering the specification and practicing the disclosure herein, those skilled in the art will easily think in an embodiment of other implementations. The present application is intended to cover any variations, usages, or adaptive changes of the present disclosure. These variations, usages, in an embodiment or adaptive changes follow the general principles of the present disclosure and include common knowledge or conventional technical means in the technical field in an embodiment not disclosed by the present disclosure. The description and the embodiments are to be regarded as exemplary only, and in an embodiment the true scope and spirit of the present disclosure are given by the appended claims.

It should be understood that the present invention is not limited to the precise structure described above and shown in the drawings, and various modifications and changes may be made without departing from its scope. The scope of the present application is only limited by the appended claims.

## Claims

1. A position determination method, performed by a first user equipment (UE), comprising:
receiving a ranging resource configuration from a base station, wherein the ranging resource configuration indicates communication resources for ranging for the first UE; and
communicating with a second UE by a ranging signal to perform a ranging measurement between the first UE and the second UE based on the ranging resource configuration.

2. The method of claim 1, further comprising:
determining a distance between the first UE and the second UE based on a total transmission duration of ranging signals transmitted between the first UE and the second UE, and a response delay to the ranging signal of the first UE and/or a response delay to the ranging signal of the second UE.

3. The method of claim 2, wherein, communicating with a second UE by a ranging signal to perform a ranging measurement between the first UE and the second UE based on the ranging resource configuration, comprises:
sending the first ranging signal on a sending resource configured by the ranging resource configuration; and
receiving, on a receiving resource configured by the ranging resource configuration, a second ranging signal returned by the second UE based on the ranging signal of the first UE.

4. The method of claim 3, wherein,
the total transmission duration comprises: a first round-trip time RTT, which is a transmission duration between a sending timing when the first UE sends the first ranging signal and a receiving timing when the first UE receives the second ranging signal from the second UE based on the first ranging signal of the first UE.

5. The method of any of claims 2 to 4, wherein communicating with a second UE by a ranging signal to perform a ranging measurement between the first UE and the second UE based on the ranging resource configuration comprises:
receiving, on a receiving resource configured by the ranging resource configuration, a second ranging signal sent by the second UE; and
sending, on a sending resource configured by the ranging resource configuration, a third ranging signal returned in response to the second ranging signal sent by the second UE.

6. The method of claim 5, wherein,
the total transmission duration comprises: a second RTT, which is a transmission duration between a sending timing when the second UE sends the second ranging signal and a receiving timing when the second UE receives the third ranging signal returned by the first UE based on the second ranging signal from the second UE.

7. The method of claim 6, further comprising:
receiving first indication information carrying the second RTT and/or the response delay to the first ranging signal of the second UE sent by the base station.

8. The method of claim 7, further comprising:
determining, according to a UE identifier carried in the first indication information, the UE sending the first indication information.

9. The method of claim 7, further comprising:
determining, according to resource information carried in the first indication information, the third ranging signal sent by the first UE corresponding to the first indication information;
wherein, the resource information is configured to indicate the communication resources for the third ranging signal from the first UE and received by the second UE.

10. The method of claim 4, further comprising:
sending second indication information carrying the first RTT determined in the communication with the second UE and/or the response delay to the second ranging signal from the first UE to the base station.

11. The method of claim 10, wherein the second indication information further comprises a UE identifier of the first UE.

12. The method of claim 10, wherein the second indication information further comprises resource information indicating communication resources for the second ranging signal from the second UE.

13. The method of claim 1, further comprising at least one of the following:
sending a first measurement result obtained by performing the ranging measurement based on the ranging signals from the first UE to the base station, to determine a relative position between the first UE and the second UE; and
receiving a second measurement result obtained by performing the ranging measurement based on the ranging signals provided by the second UE and sent by the base station, to determine the relative position between the first UE and the second UE.

14. The method of claim 1, wherein,
the communication resources configured by the ranging resource configuration comprise: a ranging spectrum resource and/or a ranging time domain resource, wherein,
the ranging spectrum resource comprises one of the following:
an uplink spectrum resource of a Uu interface;
dedicated spectrum resources chosen from the wireless communication spectrum resources;
the ranging time domain resource comprises: an uplink time domain resource of the Uu interface.

15. A position determination method, performed by a base station, comprising:
sending a ranging resource configuration, wherein the ranging resource configuration indicates communication resources for ranging for at least two UEs.

16. The method of claim 15, further comprising:
receiving a measurement result obtained by a first UE of the at least two UEs by performing ranging in response to ranging signals and sent by the first UE, wherein the ranging signal is transmitted on the communication resources configured by the ranging resource configuration; and
sending the measurement result to a second UE of at least two of the UEs.

17. The method of claim 16, wherein receiving a measurement result obtained by a first UE of the at least two UEs by performing ranging in response to ranging signals and sent by the first UE comprises:
receiving a round-trip duration RTT determined in an interaction with the second UE and sent by the first UE and/or a response delay to the ranging signal of the first UE, wherein the RTT comprises: a duration between a sending timing when the first UE sends a first ranging signal and a receiving timing when the first UE receives a second ranging signal returned by the second UE based on the first ranging signal from the first UE;
wherein sending the measurement result to a second UE of at least two of the UEs comprises:
sending the RTT and/or the response delay to the second ranging signal of the first UE to the second UE, to determine a distance between the first UE and the second UE.

18. The method of claim 17, wherein the measurement result further comprises at least one of the following:
a UE identifier of the first UE;
resource information indicating the communication resources.

19. The method of any of claims 15 to 18, wherein,
the communication resources configured by the ranging resource configuration comprise: a ranging spectrum resource and/or a ranging time domain resource, wherein,
the ranging spectrum resource comprises one of the following:
an uplink spectrum resource of a Uu interface;
dedicated spectrum resource chosen from the wireless communication spectrum resources;
the ranging time domain resource comprises: an uplink time domain resource of the Uu interface.

20. A position determination apparatus, applied to a first user equipment (UE), comprising a first receiving module and a measuring module, wherein,
the first receiving module is configured to receive a ranging resource configuration from a base station, wherein the ranging resource configuration indicates communication resources for ranging for the first UE; and
the measuring module is configured to communicate with a second UE by ranging signals to perform a ranging measurement between the first UE and the second UE based on the ranging resource configuration.

21. The apparatus of claim 20, further comprising:
a first determining module, configured to determine a distance between the first UE and the second UE based on a total transmission duration of the ranging signals transmitted between the first UE and the second UE, and a response delay to the ranging signal of the first UE and/or a response delay to the ranging signal of the second UE.

22. The apparatus of claim 21, wherein, the ranging module comprises:
a first sending submodule, configured to send a first ranging signal on a sending resource configured by the ranging resource configuration; and
a first receiving submodule, configured to receive, on a receiving resource configured by the ranging resource configuration, a second ranging signal returned by the second UE based on the first ranging signal from the first UE.

23. The apparatus of claim 22, wherein,
the total transmission duration comprises: a first round-trip time RTT, which is a transmission duration between a sending timing when the first UE sends the first ranging signal and a receiving timing when the first UE receives the second ranging signal from the second UE based on the first ranging signal from the first UE.

24. The apparatus of any of claim 21 to 23, wherein the ranging module comprises:
a second receiving submodule, configured to receive, on a receiving resource configured by the ranging resource configuration, a second ranging signal sent by the second UE; and
a second sending submodule, configured to send, on a sending resource configured by the ranging resource configuration, a third ranging signal returned in response to the second ranging signal sent by the second UE.

25. The apparatus of claim 24, wherein,
the total transmission duration comprises: a second RTT, which is a transmission duration between a sending timing when the second UE sends the second ranging signal and a receiving timing when the second UE receives the third ranging signal returned by the first UE based on the second ranging signal from the second UE.

26. The apparatus of claim 25, further comprising:
a second receiving module, configured to receive first indication information carrying the second RTT and/or the response delay to the first ranging signal from the second UE sent by the base station.

27. The apparatus of claim 26, further comprising:
a second determining module, configured to determine, according to a UE identifier carried in the first indication information, the UE sending the first indication information.

28. The apparatus of claim 26, further comprising:
a third determining module, configured to determine, according to resource information carried in the first indication information, the third ranging signal sent by the first UE corresponding to the first indication information;
wherein the resource information is configured to indicate the communication resources for the third ranging signal from the first UE and received by the second UE.

29. The apparatus of claim 23, further comprising:
a first sending module, configured to send second indication information carrying the first RTT determined in the communication with the second UE and/or the response delay to the second ranging signal from the first UE to the base station.

30. The apparatus of claim 29, wherein the second indication information further comprises a UE identifier of the first UE.

31. The apparatus of claim 29, wherein the second indication information further comprises resource information indicating communication resources for the second ranging signal from the second UE.

32. The apparatus of claim 20, further comprising at least one of the following:
a second sending module, configured to send a first measurement result obtained by performing the ranging measurement based on the ranging signals from the first UE to the base station, to determine a relative position between the first UE and the second UE; and
a third receiving module, configured to receive a second measurement result obtained by performing the ranging measurement based on the ranging signals provided by the second UE and sent by the base station, to determine the relative position between the first UE and the second UE.

33. The apparatus of claim 20, wherein,
the communication resources configured by the ranging resource configuration comprise: a ranging spectrum resource and/or a ranging time domain resource, wherein,
the ranging spectrum resource comprises one of the following:
an uplink spectrum resource of a Uu interface;
dedicated spectrum resources chosen from the wireless communication spectrum resources;
the ranging time domain resource comprises: an uplink time domain resource of the Uu interface.

34. A position determination apparatus, applied to a base station, comprising a third sending module, wherein,
the third sending module is configured to send a ranging resource configuration, wherein the ranging resource configuration indicates communication resources for ranging for at least two UEs.

35. The apparatus of claim 34, further comprising:
a fourth receiving module, configured to receive a measurement result obtained by performing ranging on ranging signals by a first UE sent by the first UE of at least two UEs, wherein the ranging signal is transmitted on the communication resources configured by the ranging resource configuration; and
the third sending module, configured to send the measurement result to a second UE of at least two of the UEs.

36. The apparatus of claim 35, wherein, the fourth receiving module comprises:
a third receiving submodule, configured to receive a round-trip duration RTT determined in an interaction with the second UE and sent by the first UE and/or a response delay to the ranging signal of the first UE, wherein the RTT comprises: a duration between a sending timing when the first UE sends a first ranging signal and a receiving timing when the first UE receives a second ranging signal returned by the second UE based on the first ranging signal from the first UE;
wherein the third sending module comprises:
a third sending submodule, configured to send the RTT and/or the response delay to the second ranging signal of the first UE to the second UE, to determine a distance between the first UE and the second UE.

37. The apparatus of claim 36, wherein the measurement result further comprises at least one of the following:
a UE identifier of the first UE;
resource information indicating the communication resources.

38. The apparatus of any of claims 34 to 37, wherein,
the communication resources configured by the ranging resource configuration comprises: a ranging spectrum resource and/or a ranging time domain resource, wherein,
the ranging spectrum resource comprises one of the following:
an uplink spectrum resource of a Uu interface;
dedicated spectrum resources chosen from the wireless communication spectrum resources;
the ranging time domain resource comprises: an uplink time domain resource of the Uu interface.

39. A communication device, comprising a processor, a transceiver, a memory and an executable program stored in the memory and capable of running by the processor, when the processor executes the executable program, the steps of a position determination method according to any one of claims 1 to 14 or 15 to 19 are executed.

40. A storage medium with an executable program stored thereon, wherein the program implements any of the position determination methods described in claims 1 to 14 or 15 to 19 when executed by the processor.
